# EUROPEAN PATENT SPECIFICATION

(11) **EP 2 937 487 B1**
(45) Date of publication and mention of the grant of the patent: **18.07.2018**
(21) Application number: 15165681.6
(22) Date of filing: 27.12.2013
(51) Int. Cl.: E04D 13/147, B32B 15/085, B32B 15/20, B32B 7/12

(54) **A SKIRT MATERIAL FOR USE IN A FLASHING FOR A ROOF PENETRATING STRUCTURE AND A METHOD FOR DISPOSAL OF A SKIRT MATERIAL**
SCHÜRZENMATERIAL ZUR VERWENDUNG IN EINEM KEHLBLECH FÜR DACHDURCHDRINGENDE STRUKTUR UND VERFAHREN ZUR ENTSORGUNG EINES SCHÜRZENMATERIALS
MATÉRIAU DE JUPE DESTINÉ À ÊTRE UTILISÉ DANS UN SOLIN POUR UNE STRUCTURE PÉNÉTRANT DANS UN TOIT ET PROCÉDÉ POUR L'ÉLIMINATION D'UN MATÉRIAU DE JUPE

(30) Priority: 27.12.2012 DK 201270826
(43) Date of publication of application: 28.10.2015
(62) Divisional of application: 13199621.7
(73) Proprietor: VKR Holding A/S, 2970 Hørsholm (DK)
(72) Inventor: Melsen, Michael, 8632 Lemming (DK)
(74) Representative: AWA Denmark A/S

(56) References cited:
- EP-A2- 0 038 222
- WO-A1-01/65029
- WO-A1-2008/026921
- WO-A1-2010/026605
- WO-A1-2012/139887
- JP-A- 2003 105 936

## Description

The present invention relates to a skirt material for use in a flashing for a roof penetrating structure and having a layered structure comprising an outer cover layer, an inner cover layer and an intermediate core layer of an adhesive material adhering to both cover layers, said outer cover layer being intended to face the exterior of a building in the mounted state of the flashing, and said cover layers being made from two different materials. In a second aspect the invention relates to a method for disposal of a skirt material.

Flashings are generally used when mounting roof windows and like roof penetrating structures in order to seal the joint between a stationary frame of the window and the surrounding roofing. A flashing element mounted on a lower horizontal member of the stationary frame of the window usually includes a skirt member, which projects over the roofing material below the window and which is usually able to adapt to the shape of the roofing.

Flashings are traditionally made from lead, since lead is very easy to plastically deform with only a very limited elasticity, i.e. the lead stays substantially in the shape into which it is initially bend without bouncing back. In addition, lead is relatively easy to recycle, since it can be melted and directly reformed into for example a new skirt.

However, from an environmental point of view, lead has some very well known draw backs and may oxidise and subsequently leave streaky deposits on the surrounding roof surface.

In order to avoid these drawbacks it has been suggested to manufacture flashings as sandwich constructions in which a stress damping and stabilizing intermediate core layer of a ductile material is covered on one or both sides by foil sheeting. Typically the intermediate core layer has been made of a polymeric material or bitumen product, and the foil sheeting has been a thin metal foil, preferably sheet aluminium. The intermediate core layer of the sandwich construction has been introduced in order to mimic the mechanical properties of the traditional lead construction, and is thus relative heavy, with low elasticity and high plasticity. Additionally, the sandwich constructions have been further developed into wave-corrugated and pleated designs in order to obtain a sufficient manual deformability and stretchability to enable a good fit between the flashing and the roofing, even when using undulated roofing materials, such as tiles.

Such sandwich constructions are disclosed in EP 0038222 A2 and WO 0165029 A1.

JP 2003 105936 discloses another sandwich construction, which comprises the features of the preamble of claim 1.

The introduction of the composite sandwich constructions has, however, created new environmental draw backs, as they are difficult to recycle due to different chemical and physical properties of the materials used. The general tendency in roof flashing materials has thus been a development from the use of lead materials that are easily recyclable, but having negative environmental impact in the manufacturing, mounting and use phases, to the use of sandwich constructions, which are non-toxic but creating new environmental problems related to recycling.

It is therefore the object of the present invention to provide an improved flashing material which maintains the desired mechanical properties, while improving the suitability for recycling and depositing.

This is achieved by providing a skirt material having the features of claim 1. The intermediate core layer adheres stronger to the inner cover layer than to the outer cover layer, so that the intermediate core layer and the inner cover layer can be separated from the outer cover layer by pulling the inner cover layer away from the outer cover layer. In this way the outer cover layer, which is typically made from metal, such as aluminium, can easily be separated and recycled or disposed independently from the intermediate core layer and the inner cover layer, both of which are typically polymer-based.

Preferably, the adhesion of the intermediate core layer to the inner cover layer is so much stronger than the adhesion of the intermediate core layer to the outer cover layer that the adhesive material of the intermediate core layer can be pulled substantially entirely off the outer cover layer by pulling on the inner cover layer.

In some embodiments, the separation of the outer and intermediate core layers are aided by the direction of the pull on the inner cover layer being substantially parallel or at an angle of less than 45 degrees to the plane of the outer cover layer, resulting in the intermediate core layer being peeled or rolled off the outer cover layer. The plane of the outer cover layer is here to be understood as the overall plane defined by the entire cover layer even though sections thereof may have a different orientation, for example due to the skirt material being corrugated.

Moreover, the outer cover layer may be heated or cooled prior to pulling on the inner cover layer to reduce the adhesion of the intermediate core layer thereto, and/or the outer cover layer could be coated with a release agent on its inner side during manufacture. This applies independently of the angle of the pull.

In some embodiments it may also ease the separation if bent edges of the inner and/or outer cover layers are bend back before pulling on the inner cover layer.

Any remains of the intermediate core layer still adhering to the outer cover layer after the intermediate core layer and the inner cover layer have been pulled off, may be removed by heating the outer cover layer so that the residue of the adhesive material melts off. Depending on the materials used, this may typically be achieved by heating the outer cover layer to about 200°C.

In the following the invention will be described in more detail with reference to the drawings, where:
Fig. 1 shows a perspective cross-sectional view of the lower left corner of the frame of a roof window mounted in a roof structure and during installation of a skirt flashing element according to an embodiment of the invention, and
Fig. 2 shows a cross-section of a skirt member with a centre section cut away.

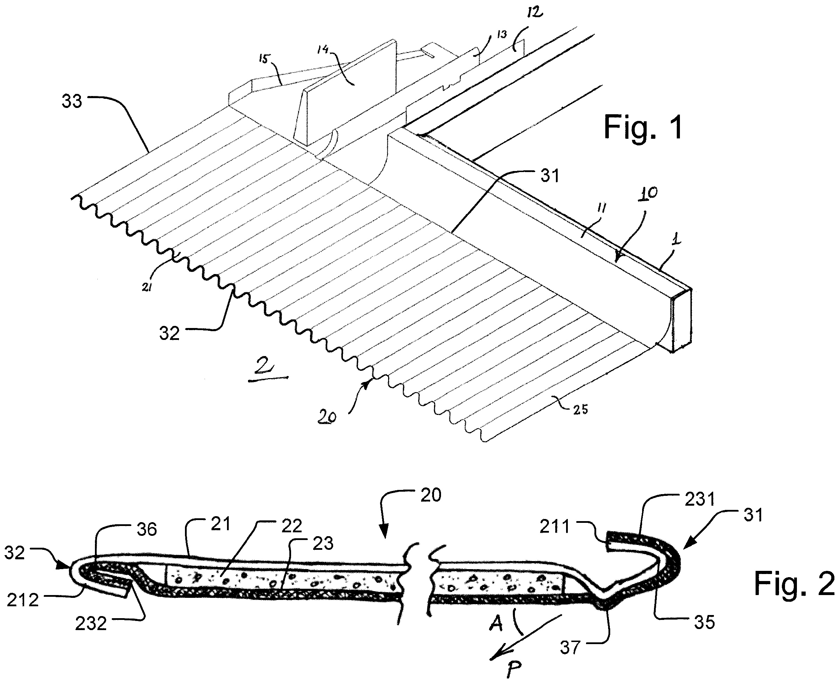

In the embodiment shown in Fig. 1, a skirt flashing element comprises a rail member 10 and a skirt member 20. The rail member is attached to the skirt member along a first edge 31 and serves as a connecting member between the skirt member 20 and, for example, the frame 1 of a roof window. The rail member 10 comprises a number of sub-members 11, 12, 13, 14, 15 intended for being connected to the window and/or roof in a manner known per se. The skirt member is corrugated to provide a surplus of material in a direction along its first edge 31 and second edge 32, the latter being intended to fit closely against the roof surface 2 in the mounted state.

As may be seen in Fig. 2, the skirt material used for the skirt member 20 is a three-layer laminated structure with an outer cover layer 21, an intermediate adhesive core layer 22 and an inner cover layer 23.

The outer cover layer is preferably made from lacquered sheet aluminium with a thickness of 0,15 mm, corresponding to the material presently used in virtually all of the skirt elements that are commercially available.

The inner cover layer 23 is a cross-laminated foil of a polyolefin, preferable polyethylene, such as the one sold under the trademark Valeron® and with a thickness of 0,075 mm. Other metals and polymers may, however, be used. Regardless what material is used, it must be resistant to contact with the materials used in the intermediate adhesive core layer and the roofing material. Moreover, as the skirt member will be subject to large temperature variations, the inner cover layer must be able to follow the thermal expansions of the other materials of the skirt member and vice versa. When using a polymer for the inner layer it is presently preferred that the sheet is at least 0,075 mm thick, has a tensile strength of at least 40 MPa, a tearing strength of at least 55 N and displays an elongation at break of at least 150 % and shrinkage of no more than 3%.

The intermediate adhesive core layer is preferably made as described in WO01/65029, i.e. from a carrier material admixed with a non-structural constituent, such as a metal compound having a density higher than 3.5 g/ml, preferably higher than 4.5 g/ml. The non-structural constituent is preferably particles and may be a pure metal, an oxidized metal, an alloy or metal bound in a chemical compound, such as in inorganic salt. Presently preferred materials are ferric oxide, which is usually readily available and cheap, and barium sulphate, which has excellent weather resistance properties. Other possible metals, which may form basis for the non-structural constituent, are silver, molybdenum and copper, which may be bound in a chloride, sulphate, sulphide, or nitrate salt. Further compounds not containing heavy metals, such as for example carbon black, minerals, ceramics or polymers, may also be used, but metal-based compounds are presently preferred. The non-structural constituent preferably constitutes more than 50 % by weight of the intermediate adhesive core layer material, preferably 75% and still more preferred up to 95 %.

The carrier materials should of course be compatible with the non-structural constituent chosen. Polymeric materials, such as PVC or butyl rubber (styrene-butadiene radial block copolymer), and bitumen products are suitable for this purpose. Bitumen may be preferred in some aspects of the invention because it is sufficient tacky at ambient temperatures for allowing the lamination with a foil sheeting used as cover layer. When environmental considerations are important butyl rubber is generally preferred. Butyl rubber material with high tackiness and which is suitable for use in the intermediate core layer can be achieved by admixing carbon black and particulate barium sulphate. However, when making the material for the skirt member in a lamination process, the tackiness of butyl rubber and PVC may not sufficient for achieving a good adhesion to the cover layers and it may therefore be advantageous to add adhesives or adhesion promoting primers to one or both cover layers.

Regardless what material is used, the intermediate adhesive core layer must be resistant to contact with the materials used in the inner and outer layers. Moreover, as the skirt element will be subject to larger temperature variations, the intermediate adhesive core layer must be able to follow the thermal expansions of the other materials of the skirt member and vice versa. According to the invention, the intermediate core layer material has a density of at least 2,6 g/ml, a solids content of at least 99,5 %, a calcined residue of at least 80 % and an adhesion of at least 30 N to the inner cover layer.

In the embodiment shown, the outer and inner cover layers 21, 23 define the extent of the skirt member 20, whereas the width of the intermediate core layer 22 is smaller.

The intermediate adhesive core layer 22 is isolated from the exterior by the outer edges 211, 212, 231, 232 of the cover layers 21,23 being given a sharp bent 35, 36. An adhesive or glue may be provided on one or both of the outer edges on the side facing the other cover layer to interconnect them or the inner cover layer may be softened by heating to make it adhere to the outer cover layer.

In Fig. 2 the intermediate core layer 22 has been illustrated as ending a distance from the bend edges 35, 36 so that the material of the cover layers 21, 23 come together substantially without compressing or deforming the intermediate adhesive core layer. This is to provide good contact between the cover layers and provide a very durable skirt member 20, but in other embodiments the intermediate adhesive core layer may extend further.

The edges 211, 231 to the right in Fig. 2 are use for interconnection of the skirt member 20 to the rail member 10 and the bend 35 is relatively open to allow engagement with a similarly bent edge (not shown) on the rail member. Once the bend edges of the skirt and rail members are in engagement, the joint may be compressed and/or glued or welded to form a permanent connection.

At the other side, to the left in Fig. 2, the cover layers 21, 23 are bent sharply to form a waterproof closure of the skirt member 20, this bend 36 forming the edge 32 of the skirt element in the mounted state. The edges 212, 232 are here bent inwards and upwards so that they are located between the skirt member 20 and the roofing material (not shown) in the mounted state. This means that the joint is protected from the weather and that the exterior surface of the skirt member is smooth and uninterrupted hence providing optimal water draining properties.

The intermediate core layer 22 may be provided as two or more strips of material running substantially in parallel, as dots or in any other appropriate non-continuous pattern, so that its surface area is smaller than the surface area of the cover layers 21, 23. This will save material and may ease separation.

Though not visible in the drawing it is to be understood that all layers of the skirt member 20 have substantially the same length when seen in parallel to the first and second edges 31, 32 or bent edges 35, 36. However, the end edges 33 may be bent in the same way as shown on the lowermost edge in Fig. 2 to provide a water-proof and durable closure of the ends of the skirt member. To facilitate this, the intermediate core layer 22 may be slightly shorter than the cover layers.

If using a release agent between the outer cover layer and the intermediate core layer to facilitate later separation, it may, however, be expedient that the intermediate core layer is included in one or more of the bends to fix-ate it in relation to the cover layers.

In Fig. 2 the skirt member is shown with a depression 37 in the cover layers 21, 23 close to the first bend edges 211, 231 forming the first side 31 of the skirt member 20. Such a depression is also found on prior art skirt members and is intended to guide the bend of the skirt member, when it is being bend back as part of the process for mounting a roof window. To serve its purpose, this bend should preferably be relatively sharp, and it may therefore be preferred that the intermediate adhesive core layer 22 is not present between the cover layers at this point.

When the skirt flashing is no longer to be used, the skirt member 20 is separated from the rail member 10, and the inner cover layer 23 is then pulled away from the outer cover layer 21 with the intermediate core layer 22 adhering primarily to the inner cover layer. This requires a good hold of the two cover layers and it is therefore preferred to first peel the outer edge 231 of the inner cover layer 23 off the outer cover layer 21 at the first edge 31 of the skirt member. It will normally not be required to un-bend the bent 35 and the bent edge 211 on the outer cover layer may even facilitate a good hold. The edge 231 of the inner cover layer is then preferably pulled downwards and to the left in Fig. 2 as shown by the arrow P to force the intermediate core layer 22, which adheres most strongly to the inner cover layer 23, away from the outer cover layer 21. Depending on the adhesive properties of the material chosen for the intermediate core layer, the angle A of the pull on the inner cover layer may need to be directed either directly downwards or sideways to the left in Fig. 2. For a bitumen-based adhesive adhering to regular sheet aluminium an angle of less than 45 degrees, i.e. close to parallel with the plane of the outer cover layer, is presently considered advantageous, but determining the optimum angle for a given combination of materials is a matter of a few simple experiments.

The bent edges 212, 232 at the second edge 32 of the skirt member 20 may be un-bent before starting the pull on the inner cover layer 23 to facilitate separation, but unless an adhesive is used between the bent edges this is normally not necessary.

Once separated the outer cover layer 21, which is typically made of metal, can be recycled, while the intermediate core layer 22 and inner cover layer 23 may for example be melted or burned. The further life cycle of the individual components will, however, depend heavily on the materials used, taking account of factors such as their structural and chemical complexity, toxicity, and the demand for recycled material.

In this the invention has been described with reference to a flashing element intended for use at the bottom of a roof window, but it is to be understood that the skirt material as defined in the claims may be used at different positions in relation to the window or with other types of roof penetrating structures. Likewise it is to be understood that the skirt member does not have to be connected to a rail member, but that it may be used on its own, possibly being connected directly to a roof penetrating structure.

## Claims

1. A skirt material for use in a flashing for a roof penetrating structure and having a layered structure comprising an outer cover layer (21), an inner cover layer (23) and an intermediate core layer (22) of an adhesive material adhering to both cover layers, said outer cover layer (21) being intended to face the exterior of a building in the mounted state of the flashing, and said cover layers (21 and 23) being made from different materials, wherein the intermediate core layer (22) adheres stronger to the inner cover layer (23) than to the outer cover layer (21), **characterized in that**
said intermediate core layer material has a density of at least 2,6 g/ml, a solids content of at least 99,5 % by weight, a calcined residue of at least 80 % by weight and an adhesion of at least 30 N to the inner cover layer (23).

2. A skirt material according to claim 1, where the adhesion of the intermediate core layer (22) to the inner cover layer (23) is so much stronger than the adhesion of the intermediate core layer (22) to the outer cover layer (21), that the adhesive material of the intermediate core layer (22) can be pulled substantially entirely off the outer cover layer (21) by pulling on the inner cover layer (23).

3. A skirt material according to claim 1 or 2, where the intermediate adhesive material comprises a non-curable bituminous material.

4. A skirt material according to any of the preceding claims, where the intermediate adhesive material is a composite comprising metal particles and/or comprises a metal compound having a density higher than 3.5 g/ml.

5. A skirt material according to any of the preceding claims, where the inner cover layer (23) is made from a polymer, preferably from a polyolefin and still more preferred from cross-laminated polyethylene.

6. A skirt material according to any of the preceding claims, where the outer cover layer (21) is made from a metal, preferably from aluminium.

7. A skirt material according to any of the preceding claims, where the outer cover layer (21) is coated with a release agent on its inner side.

8. A method for disposal of a skirt material according to claim 1, the skirt material being made for use in a flashing for a roof penetrating structure and having a layered structure comprising an outer cover layer (21), an inner cover layer (23) and an intermediate core layer (22) of an adhesive material adhering to both cover layers, said outer cover layer (21) being intended to face the exterior of a building in the mounted state of the flashing, and said cover layers (21 and 23) being made from different materials, **characterized in that** the intermediate core layer (22) and the inner cover layer (23) are separated from the outer cover layer (21) by pulling the inner cover layer (23) away from the outer cover layer (21).

9. A method according to claim 8, where the direction of the pull on the inner cover layer (23) is substantially parallel or at an angle of less than 45 degrees to the plane of the outer cover layer (21).

10. A method according to claim 8 or 9, where the outer cover layer (21) is heated or cooled prior to pulling on the inner cover layer (23).

11. A method according to any of claims 8-10, where bent edges (35, 36) of the inner (23) and/or outer cover layers (21) are bend back before pulling on the inner cover layer (23).

12. A method according to any of claims 8-11, where, after the intermediate core layer (22) and the inner cover layer (23) have been pulled off, the outer cover layer (21) is heated to melt off any remains of the intermediate core layer (22) still adhering thereto.

## Patentansprüche

1. Schürzenmaterial zur Verwendung in einer Eindeckung für eine dachdurchdringende Struktur, aufweisend eine geschichtete Struktur mit einer äußeren Abdeckschicht (21), einer inneren Abdeckschicht (23) und einer Zwischenkernschicht (22) aus einem Haftmaterial, die an beiden Abdeckschichten anhaftet, wobei die äußere Abdeckschicht (21) dazu vorgesehen ist, im Einbauzustand der Eindeckung der Außenseite eines Gebäudes zugewandt zu sein, und wobei die Abdeckschichten (21 und 23) aus unterschiedlichem Materialien hergestellt sind, wobei die Zwischenkernschicht (22) stärker an der inneren Abdeckschicht (23) anhaftet als an der äußeren Abdeckschicht (21), **dadurch gekennzeichnet, dass**
das Zwischenkernschichtmaterial eine Dichte von wenigstens 2,6 g/ml, einen Feststoffgehalt von wenigstens 99,5 Gew.-%, einen kalzinierten Rückstand von wenigstens 80 Gew.-% und eine Haftfestigkeit von wenigstens 30 N zu der inneren Abdeckschicht (23) aufweist.

2. Schürzenmaterial nach Anspruch 1, wobei die Haftung der Zwischenkernschicht (22) an der inneren Abdeckschicht (23) um so vieles stärker ist als die Haftung der Zwischenkernschicht (22) an der äußeren Abdeckschicht (21), dass das Haftmaterial der Zwischenkernschicht (22) durch Ziehen an der inneren Abdeckschicht (23) im Wesentlichen vollständig von der äußeren Abdeckschicht (21) abgezogen werden kann.

3. Schürzenmaterial nach Anspruch 1 oder 2, wobei das intermediäre Haftmaterial ein nicht härtbares bituminöses Material umfasst.

4. Schürzenmaterial nach einem der vorhergehenden Ansprüche, wobei das intermediäre Haftmaterial ein Verbundstoff ist, der Metallteilchen und/oder eine Metallverbindung mit einer Dichte von mehr als 3,5 g/ml aufweist.

5. Schürzenmaterial nach einem der vorhergehenden Ansprüche, wobei die innere Abdeckschicht (23) aus einem Polymer, vorzugsweise aus Polyolefin und besonders bevorzugt aus kreuzlaminiertem Polyethylen hergestellt ist.

6. Schürzenmaterial nach einem der vorhergehenden Ansprüche, wobei die äußere Abdeckschicht (21) aus Metall, vorzugsweise aus Aluminium, hergestellt ist.

7. Schürzenmaterial nach einem der vorhergehenden Ansprüche, wobei die äußere Abdeckschicht (21) auf ihrer Innenseite mit einem Trennmittel beschichtet ist.

8. Verfahren zur Entsorgung eines Schürzenmaterials nach Anspruch 1, wobei das Schürzenmaterial zur Verwendung in einer Eindeckung für eine dachdurchdringende Struktur hergestellt ist und eine geschichtete Struktur mit einer äußeren Abdeckschicht (21), einer inneren Abdeckschicht (23) und einer Zwischenkernschicht (22) aus einem Haftmaterial, das an beiden Abdeckschichten anhaftet, aufweist, wobei die äußere Abdeckschicht (21) dazu vorgesehen ist, im Einbauzustand der Eindeckung der Außenseite eines Gebäudes zugewandt zu sein und wobei die Abdeckschichten (21 und 23) aus unterschiedlichen Materialien hergestellt sind, **dadurch gekennzeichnet, dass** die Zwischenkernschicht (22) und die innere Abdeckschicht (23) von der äußeren Abdeckschicht (21) getrennt werden, indem die innere Abdeckschicht (23) von der äußeren Abdeckschicht (21) weggezogen wird.

9. Verfahren nach Anspruch 8, wobei die Richtung des Zugs an der inneren Abdeckschicht (23) im Wesentlichen parallel oder in einem Winkel von weniger als 45° zu der Ebene der äußeren Abdeckschicht (21) liegt.

10. Verfahren nach Anspruch 8 oder 9, wobei die äußere Abdeckschicht (21) vor dem Ziehen an der inneren Abdeckschicht (23) erwärmt oder abgekühlt wird.

11. Verfahren nach einem der Ansprüche 8 bis 10, wobei gebogene Kanten (35, 36) der inneren (23) und/oder der äußeren Abdeckschicht (21) vor dem Ziehen an der inneren Abdeckschicht (23) zurückgebogen werden.

12. Verfahren nach einem der Ansprüche 8 bis 11, wobei die äußere Abdeckschicht (21) erhitzt wird, um jegliche Reste der Zwischenkernschicht (22), die noch daran anhaften, abzuschmelzen, nachdem die Zwischenkernschicht (22) und die innere Abdeckschicht (23) abgezogen worden sind.

## Revendications

1. Matériau de jupe pour une utilisation dans un solin pour une structure pénétrant un toit et ayant une structure en couches comprenant une couche de couverture externe (21), une couche de couverture interne (23) et une couche d'âme intermédiaire (22) en un matériau adhésif adhérant aux deux couches de couverture, ladite couche de couverture externe (21) étant destinée à faire face à l'extérieur d'un bâtiment dans l'état monté du solin, et lesdites couches de couverture (21 et 23) étant réalisées à partir de matériaux différents, dans lequel la couche d'âme intermédiaire (22) adhère plus fortement à la couche de couverture interne (23) qu'à la couche de couverture externe (21), **caractérisé en ce que**
ledit matériau de couche d'âme intermédiaire a une masse volumique d'au moins 2,6 g/mL, une teneur en matière sèche d'au moins 99,5 % en poids, un résidu calciné d'au moins 80 % en poids et une adhérence d'au moins 30 N à la couche de couverture interne (23).

2. Matériau de jupe selon la revendication 1, où l'adhérence de la couche d'âme intermédiaire (22) à la couche de couverture interne (23) est bien plus forte que l'adhérence de la couche d'âme intermédiaire (22) à la couche de couverture externe (21), le matériau adhésif de la couche d'âme intermédiaire (22) peut être retiré sensiblement entièrement de la couche de couverture externe (21) en tirant sur la couche de couverture interne (23).

3. Matériau de jupe selon la revendication 1 ou 2, où le matériau adhésif intermédiaire comprend un matériau bitumineux non durcissable.

4. Matériau de jupe selon l'une quelconque des revendications précédentes, où le matériau adhésif intermédiaire est un composite comprenant des particules métalliques et/ou comprend un composé métallique ayant une masse volumique supérieure à 3,5 g/mL.

5. Matériau de jupe selon l'une quelconque des revendications précédentes, où la couche de couverture interne (23) est réalisée à partir d'un polymère, de préférence à partir d'une polyoléfine et de manière encore davantage préférée à partir d'un polyéthylène à stratification croisée.

6. Matériau de jupe selon l'une quelconque des revendications précédentes, où la couche de couverture externe (21) est réalisée à partir d'un métal, de préférence à partir de l'aluminium.

7. Matériau de jupe selon l'une quelconque des revendications précédentes, où la couche de couverture externe (21) est revêtue d'un agent de démoulage sur son côté interne.

8. Procédé d'élimination d'un matériau de jupe selon la revendication 1, le matériau de jupe étant réalisé pour une utilisation dans un solin pour une structure pénétrant un toit et ayant une structure en couches comprenant une couche de couverture externe (21), une couche de couverture interne (23) et une couche d'âme intermédiaire (22) en un matériau adhésif adhérant aux deux couches de couverture, ladite couche de couverture externe (21) étant destinée à faire face à l'extérieur d'un bâtiment dans l'état monté du solin, et lesdites couches de couverture (21 et 23) étant réalisées à partir de matériaux différents, **caractérisé en ce que** la couche d'âme intermédiaire (22) et la couche de couverture interne (23) sont séparées de la couche de couverture externe (21) en détachant la couche de couverture interne (23) de la couche de couverture externe (21).

9. Procédé selon la revendication 8, où la direction de la traction sur la couche de couverture interne (23) est sensiblement parallèle à ou forme un angle inférieur à 45 degrés avec le plan de la couche de couverture externe (21) .

10. Procédé selon la revendication 8 ou 9, où la couche de couverture externe (21) est chauffée ou refroidie avant de tirer sur la couche de couverture interne (23).

11. Procédé selon l'une quelconque des revendications 8 à 10, où des bords courbés (35, 36) des couches de couverture interne (23) et/ou externe (21) sont recourbés vers l'arrière avant de tirer sur la couche de couverture interne (23).

12. Procédé selon l'une quelconque des revendications 8 à 11, où, après que la couche d'âme intermédiaire (22) et la couche de couverture interne (23) ont été retirées, la couche de couverture externe (21) est chauffée pour éliminer par fusion tout reste de la couche d'âme intermédiaire (22) adhérant toujours à celle-ci.
